**Europäisches Patentamt**

**European Patent Office**

**Office européen des brevets**

(19)

(11) Publication number : **0 475 587 A1**

# EUROPEAN PATENT APPLICATION

(12)

(21) Application number : **91307385.4**

(51) Int. Cl.⁵ : **B65B 19/22,** B31B 17/00

(22) Date of filing : **12.08.91**

(30) Priority : **15.08.90 US 568358**

(43) Date of publication of application :
**18.03.92 Bulletin 92/12**

(84) Designated Contracting States :
**AT BE CH DE DK ES FR GB GR IT LI NL SE**

(71) Applicant : **Philip Morris Products Inc.**
**3601 Commerce Road**
**Richmond Virginia 23234 (US)**

(72) Inventor : **Adams, Jonah, Jr.**
**9612 Riddle Road**
**Chesterfield, Virginia 23832 (US)**
Inventor : **Donoff, Richard C.**
**1951 Greenfield Drive**
**Richmond, Virginia 23235 (US)**
Inventor : **Barnes, John D.**
**2210 Criston Drive**
**Newport News, Virginia 23602 (US)**

Inventor : **Fishburne, Howard H.**
**3409 Lence Court**
**Charlotte, North Carolina 28213 (US)**
Inventor : **Maclauchlan, Victor L.**
**5804 Chrisfield Dr.**
**Chester, Virginia 23831 (US)**
Inventor : **Pham, Xuan M.**
**2325 Thousand Oaks Drive**
**Richmond, Virginia 23294 (US)**
Inventor : **Pitt, Linwood L.**
**2709 Pershing Ave.**
**Richmond, Virginia 23228 (US)**
Inventor : **Rinehart, Steven R.**
**12001 West Petty Road**
**Midlothian, Virginia 23113 (US)**
Inventor : **Tomanovits, John**
**5210C Castlewood Road**
**Richmond, Virginia 23234 (US)**
Inventor : **Wilder, Duane C.**
**7225 Cannock Drive**
**Chesterfield, Virginia 23832 (US)**

(74) Representative : **Marlow, Nicholas Simon et al**
**Reddie & Grose 16, Theobalds Road**
**London WC1X 8PL (GB)**

(54) **Process for packaging cigarettes.**

(57)    A process for efficiently packaging cigarettes into a pack having a cross-section with one or more arcuate surfaces and having plastic end caps is provided. The process comprises :
a) forming a shell from a blank ;
b) inserting a cigarette bundle into the shell ;
c) inserting an end cap into at least one end of the shell ; and
d) adhering the or each end cap to the shell.

EP 0 475 587 A1

*Fig.5*

## Background of the Invention

The present invention relates to a process for packaging cigarettes. More particularly, this invention relates to a process for packaging a bundle of cigarettes in a flat oval shaped hinged top cigarette box having plastic end caps.

One means of packaging cigarettes is to use a hard, paperboard box. Typically, the box contains a foil wrapped cigarette bundle and has a hinged lid at the top. In addition, the typical cigarette hinged top box has hard corners which are necessary for the box to hold its shape.

In processes used to package cigarettes in standard hinged top boxes, pre-cut and pre-scored blanks are folded around the cigarette bundle with the foil wrap. These standard processes fold the pre-cut, and pre-scored blanks into hinged top boxes having a rectangular cross-section with hard corners having 90 degree angles. A wet adhesive applied to various surfaces of the blanks is used to maintain the shape of the formed hinged top box. The hard corners of the typical hinged top box allows the wet adhesive to set and thus permanently hold the shape of the box.

However, such processes are inadequate for packaging a bundle of cigarettes in a hinged top box having a circular, oval, flat oval (e.g., having a racetrack configuration) elliptical or other cross-section having one or more arcuate surfaces. See U.S. Patent 4,923,059. A hinged top cigarette box having such a cross-sectional shape does not have hard corners that allow the blank to hold the shape of the box. On the contrary, unless the box having one or more arcuate surfaces is caused to permanently hold its shape immediately upon being wrapped, the box will begin to unwrap and take on the original shape of the blank. Thus the time needed for a wet adhesive to set will slow down an assembly operation otherwise capable of much greater throughput.

In addition, certain hinged top cigarette boxes use end caps made from various materials, such as plastic, to enclose the hinged top box and to help hold the shape of the box. The use of such end caps is novel in the art of packaging cigarettes. Such end caps do not lend themselves to standard packaging processes.

It therefore would be desirable to provide a process for efficiently packaging cigarettes in hinged top boxes with a cross-section having one or more arcuate surfaces.

It also would be desirable to provide a process for efficiently packaging cigarettes in hinged top boxes having end caps.

## Summary of the Invention

It is therefore an object of this invention to provide a process for efficiently packaging cigarettes in hinged top boxes with a cross-section having one or more arcuate surfaces.

It is another object of this invention to provide a process for efficiently packaging cigarettes in hinged top boxes having end caps.

In accordance with the invention, there is provided a process for efficiently packaging cigarettes in hinged top boxes with a cross-section having one or more arcuate surfaces and end caps to enclose the hinged top box.

Blanks of laminated or plain stock paperboard from which the hinged top boxes are made are supplied to an apparatus that forms the blanks into a shell. One end of the blank is affixed to a mandrel. When the mandrel is rotated appropriately, the blank is formed into a shell having a flat oval cross-section (e.g., similar to a racetrack configuration). The seams of the shell are then sealed by means of a dry pre-applied adhesive that is activated by heat generated by an ultrasonic sealing device to permanently hold the shape of the formed shell.

Cigarettes are collated into bundles having a particular number and arrangement and are then overwrapped with foil. These steps can occur simultaneously with the wrapping and sealing of the blanks.

Next, a foil wrapped cigarette bundle is inserted into a formed shell. Prior to the insertion of the foil wrapped cigarette bundle into the formed shell, a standard wet adhesive is applied to the inside of the shell. This adhesive is applied by sliding the formed shell over a glue nozzle. When the foil wrapped cigarette bundle is inserted into the shell, the adhesive keeps the foil bundle in place.

Next, end caps are inserted into the ends of the shell and sealed into place by means of a dry pre-applied adhesive that is activated by heat generated by ultrasonic sealing devices.

Finally, the pack is overwrapped with plastic and packed into cartons and shipping boxes for distribution to consumers and retail dealers.

## Brief Description Of The Drawings

The above and other objects and advantages of the present invention will be apparent upon consideration of the following detailed description, taken in conjunction with the accompanying drawings, in which like reference characters refer to like parts throughout, and in which:

FIG. 1 is a flow chart showing the process of the present invention;

FIG. 2 is a perspective view of a formed hinged top box made by the present invention;

FIG. 3 is a plan view of a one piece blank for forming a hinged top box made by the process of the present invention;

FIG. 4 is a cross-sectional view of an end cap inserted into an end of a hinged top box made by the process of the invention;

FIG. 5 is a front, elevation view of one embodiment of an apparatus used in the process of this invention for wrapping and sealing the laminate blank;

FIG. 6 is a perspective view of the wrapping and sealing station of the apparatus of FIG.5;

FIG. 7 is a schematic diagram of one embodiment of an apparatus used in the process of this invention for applying a wet adhesive to the inside of a formed shell made from the laminate blank;

FIG. 8 is a schematic diagram of one embodiment of an apparatus used in the process of this invention for forming a bundle of cigarettes overwrapped with foil;

FIG. 9 is a partial, cut-away view showing one aspect of the foil folding station of FIG. 8;

FIG. 10 is a partial, cut-away view showing another aspect of the foil folding station of FIG. 8;

FIG. 11 is an end view of a bundle of cigarettes organized in one particular arrangement for insertion into a formed shell made from the laminate blank;

FIG. 12 is a top plan view of one embodiment of an apparatus used in the process of this invention for inserting end caps into a formed shell made from the laminate blank;

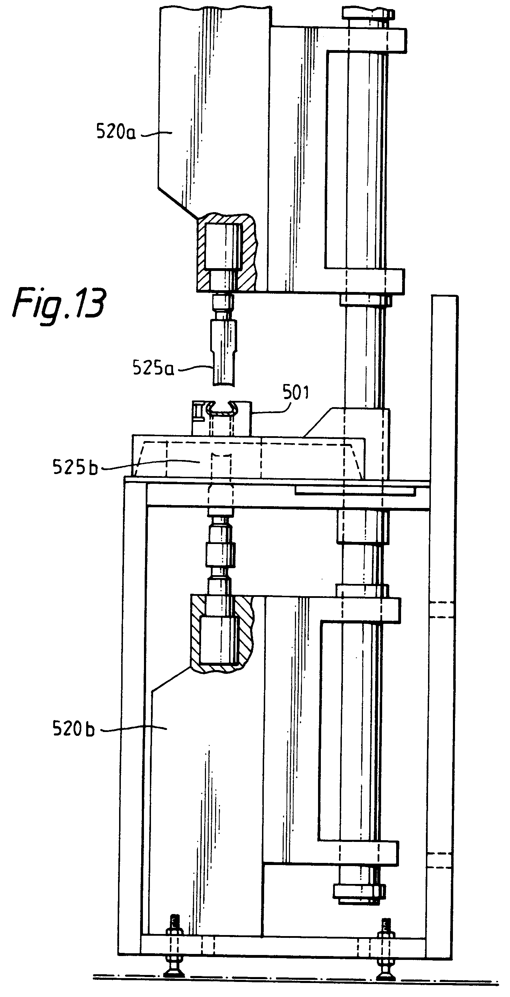

FIG. 13 is a side elevation view of an apparatus used in the process of this invention for sealing end caps into a formed shell made from the laminate blank; and

FIG. 14 is a partial perspective view of the working area of an apparatus used in the process of this invention for sealing end caps in a formed shell made from the laminate blank.

## Detailed Description of the Invention

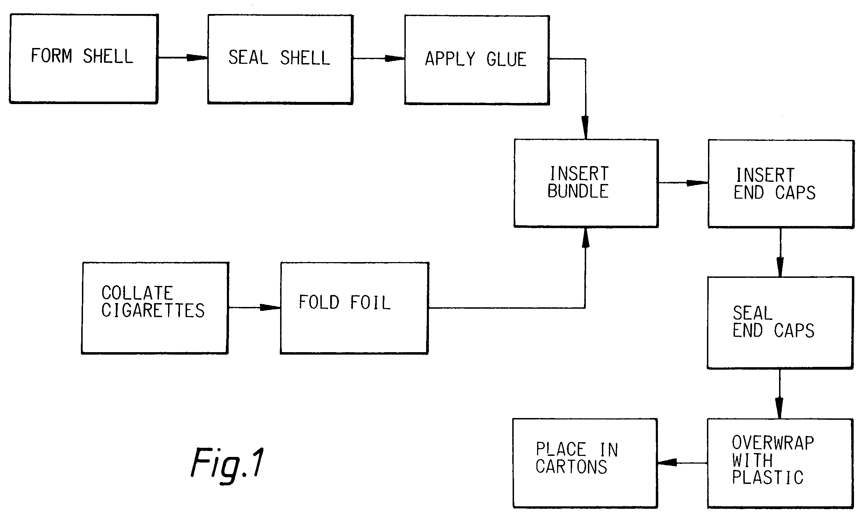

As seen in FIG. 1, the invention is a multi-step process comprising forming a hinged top shell having one or more arcuate surfaces, inserting a foil wrapped cigarette bundle, inserting and sealing end caps into the ends of the hinged top shell, overwrapping the resulting hinged top box with plastic and packaging the finished boxes in cartons for shipment to consumers and retailers. Preferably the process is accomplished by the use of various apparatuses which perform particular steps in the process of this invention. For example, the blanks used to form the hinged top shell are preferably wrapped and sealed by one apparatus. The cigarettes are collated and overwrapped with foil preferably by another apparatus. Glue is applied to the inside of the formed shell prior to the insertion of the cigarette bundle preferably by yet another apparatus. The end caps are inserted into the ends of the shell preferably by still another apparatus. The end caps are sealed into place preferably by another apparatus. The resulting hinged top box is overwrapped with plastic preferably by yet another apparatus. Of course it is to be understood that this process can be carried out by one apparatus or any number of a plurality of different apparatuses.

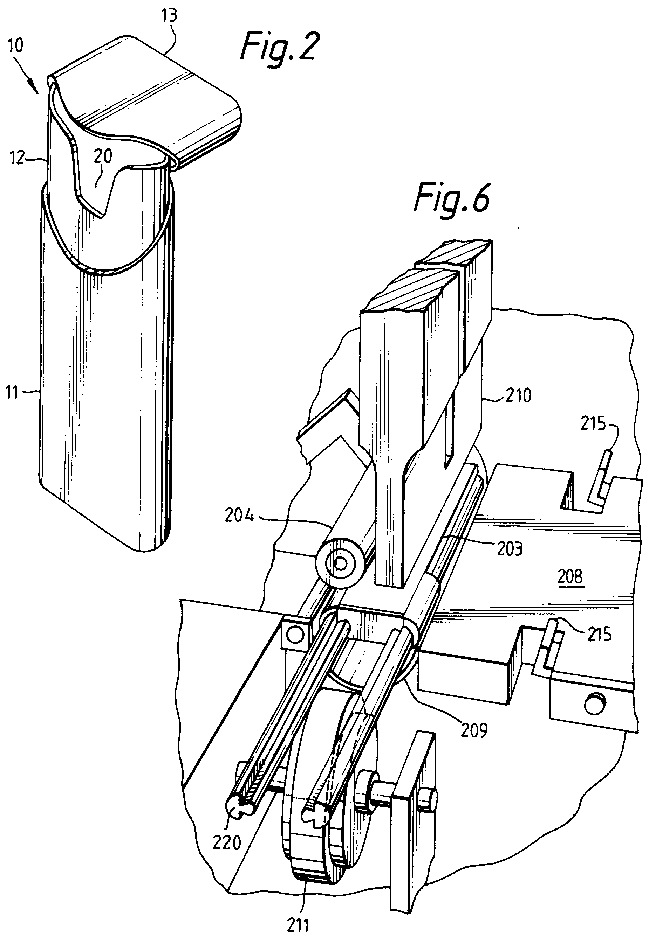

Preferably the blank 100 used to form the shell of the hinged top box is constructed of 12-point paperboard. However, blank 100 may either be laminated or plain stock. As seen in FIG. 2, the shell 10 comprises an outer sleeve 11, an inner sleeve 12, having a cut-out 20 to facilitate the removal of cigarettes from the hinged top box and a cover member 13. Such a hinged top box is described in U.S. patent 4,923,059 and is incorporated herein by reference.

A detailed description of a particular apparatus for forming and sealing blanks can be found in US 568 531.

The following will serve to briefly describe such an apparatus.

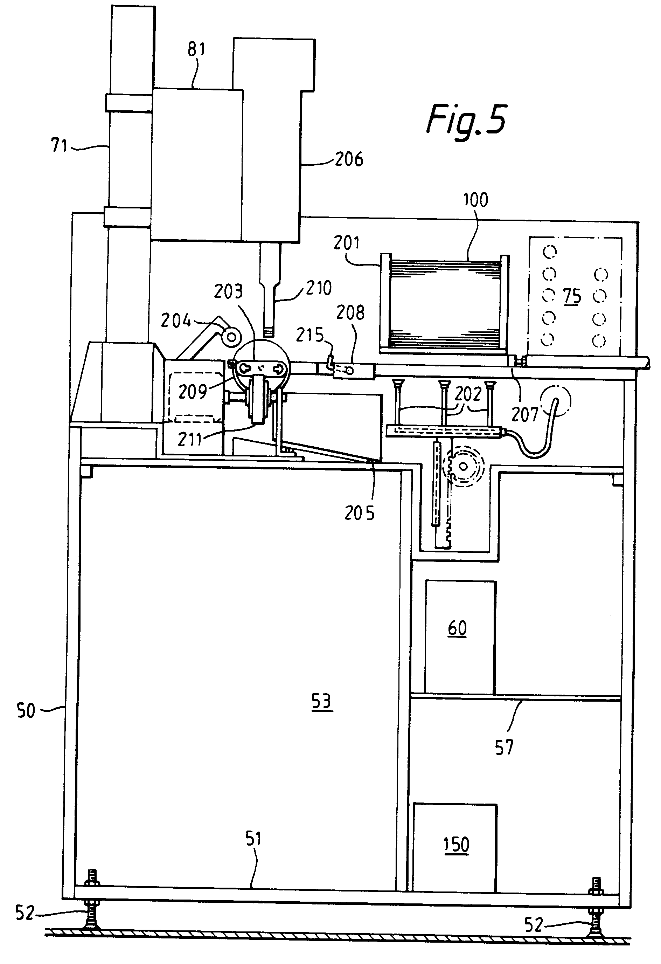

As shown in FIG. 5, one embodiment of the apparatus for forming and sealing blank 100 comprises a hopper 201, a mandrel 203, a transferring means comprising a slide 208 and pusher bar 207 for transferring blanks 100 to mandrel 203, a pinch roller 204, a support means 205 for supporting mandrel 203, an ultrasonic sealing device 206, a U-shaped fork 209 and eject roller 211 for ejecting the formed shell from mandrel 203.

Hopper 201 carries a load of blanks 100 to be formed into hinged top cigarette boxes with a cross-section having one or more arcuate surfaces. Blanks 100 are transferred from hopper 201 to a forming and sealing station,one at a time. One means of transferring blanks from hopper 201 to the forming and sealing station is by means of vacuum rods and suction cups 202 in conjunction with a standard vacuum pump (not shown) and a pusher bar 207. Vacuum rods and suction cups 202 engage the bottom most blank 100 and pull it down from hopper 201 on to a slide 208. Pusher bar 207 transfers blank 100 to the forming and sealing station. Blank 100 is fed toward the forming and sealing station so that edge 103 is perpendicular to the direction that laminate blank 100 travels. The surface of blank 100 that will be exposed to the smoker once blank 100 is formed into a hinged top box should be facing up and away from slide 208 toward hopper 201.

The forming and sealing station comprises mandrel 203, pinch roller 204, support means 205 and ultrasonic sealing device 206. To be properly wrapped, edge 103 should be properly aligned along one edge of mandrel 203 parallel to the longitudinal axis of mandrel 203. This can be accomplished by the use of side guides on slide 208. Alternatively, slide 208 can be properly dimensioned so that as blank 100 is pushed toward mandrel 203, edge 103 remains parallel to the longitudinal axis of mandrel 203. In addition, stops 215 are located on either side of slide 208 to engage, the shoulders 118 and 119 of blank 100.

These stops are located along slide 208 so that when shoulders 118 and 119 engage stops 215, edge 103 will be properly aligned on the left side of mandrel 203 as seen in FIG. 5.

To ensure that laminate blank 100 remains properly aligned on mandrel 203 during the folding operation, one side of mandrel 203 has a plurality of vacuum holes and saw teeth located thereon. The plurality of vacuum holes in conjunction with a standard vacuum pump creates a vacuum force against edge 103 to hold laminate blank 100 in place. Pinch roller 204 is rotated into contact with laminate blank 100 along edge 103 on mandrel 203. The pressure caused by pinch roller 204 results in the saw teeth biting into blank 100 to hold it in place. Mandrel 203 then rotates counterclockwise as seen in FIG. 5. As mandrel 203 rotates, pinch roller 204 remains in contact with blank 100 on mandrel 203. This ensures that blank 100 is properly wrapped around itself. To ensure the formation of a shell having one or more arcuate surfaces of proper dimensions, mandrel 203 should be slightly shallower and wider than the shape desired for the finished hinged top box.

Blank 100 is wrapped by mandrel 203 and pinch roller 204 in one continuous motion so that edge 103 abuts with line 112 and edge 104 abuts with line 113. Preferably, score lines 107 and 108 overlap after laminate blank 100 is folded.

Once formed, ultrasonic sealing device 206, such as the 900 SERIES manufactured and marketed by Branson Ultrasonics corporation, activates a pre-applied dry adhesive on blank 100. Of course other means that apply heat to activate the dry adhesive could also be used. Ultrasonic sealing device 206 is adjustably mounted on vertical support arm 71. Ultrasonic sealing device 206 includes a housing containing electrical apparatus, a converter for converting electrical energy to mechanical energy, i.e., vibration, and an acoustical horn 210 (similar in concept to a tuning fork) for transmitting mechanical energy to the workpiece. The vibration from acoustical horn 210 manifests itself as heat induced by friction between the pieces to be joined.

To properly seal blank 100 after it has been formed into a shell, ultrasonic sealing device 206, operating at a frequency of 20 kHz, should contact the shell for about 0.15 seconds. This is enough to deposit a total energy of about 30 to about 40 Joules and obtain sufficient melting of the dry adhesive. The molten adhesive, almost instantaneously cools to provide a durable bond.

It is to be understood that the parameters used for ultrasonically sealing other combinations of materials and adhesives will require different time and total energy deposition ranges. However, such parameters can be easily ascertained by conducting parametric evaluations of sample runs as is well known to those in the packaging field.

A conventional controller means 60 can be used to ensure that a proper seal is provided by ultrasonic sealing device 206. Controller means 60 compares the time and energy output of ultrasonic sealing device 206 to the desired time and energy deposition ranges. In this manner, controller means 60 can alert the operator of an improper seal or other abnormal condition.

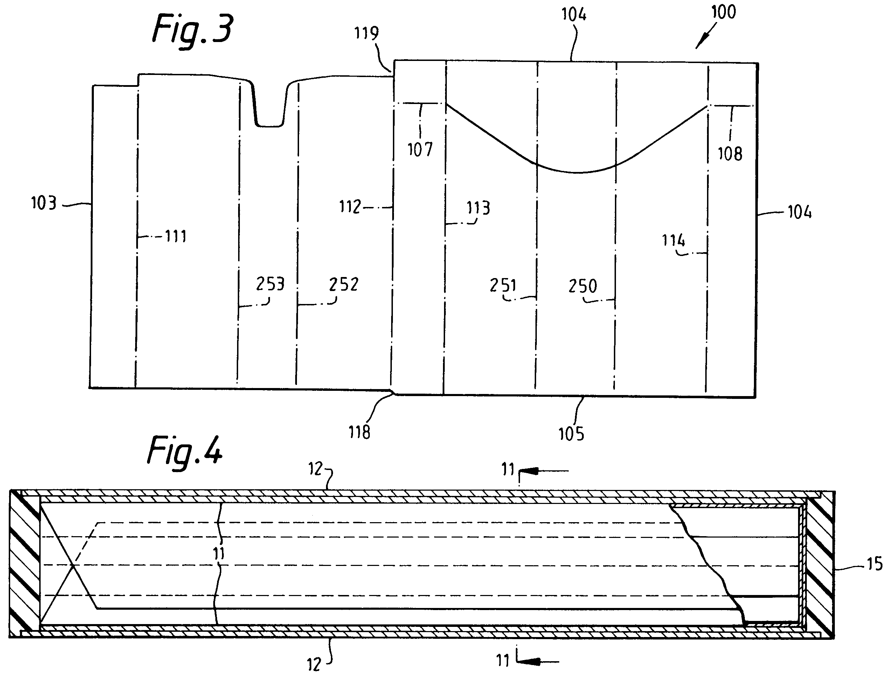

Preferably a dry adhesive such as one manufactured by Pierre Stevens and known as Latisel A7734A is used. This adhesive is activated at a temperature of less than about 200°F. This dry adhesive is preferably applied to blank 100 prior to blank 100 being loaded into hopper 201. The dry adhesive is preferably applied to blank 100 in the area bounded by edge 104 and line 114 and the area bounded by lines 112 and 113. Preferably the adhesive is applied on the inside surface of blank 100, i.e., as seen from FIG. 3 the adhesive would be applied on the side opposite to that which is shown.

Preferably ultrasonic sealing device 206 of this application uses an acoustical horn 210 shaped to contact only the area of the surface to be sealed. Preferably the part of acoustical horn 210 that contacts the formed shell on mandrel 203 is rectangular in shape having dimensions no greater than the area bounded by edge 104 and line 114 or the area bounded by lines 112 and 113. By applying the dry adhesive to blank 100 as described above, the two areas on which the dry adhesive is applied will be aligned once blank 100 is properly folded. Thus, when acoustical horn 210 of ultrasonic sealing device 206 comes in contact with one section of the formed shell on mandrel 203 to seal the shell, acoustical horn 210 activates the dry adhesive in both locations.

During the sealing process ultrasonic sealing device 210 applies between about 50 and about 70 pounds of pressure to the workpiece. In order to withstand this pressure, support means 205 is moved into position under mandrel 203 to support mandrel 203 during the sealing operation.

Conventional load cells, which are supplied by the ultrasonic sealing device manufacturer, measure the load exerted by acoustical horn 210 on the shell until a preselected load is obtained. At that point, the converters of ultrasonic sealing device 206 are activated. When the converters are activated, controller means 60 monitors the duration and magnitude of energy input to the formed shell to assure that the energy and time parameters are within predefined acceptable ranges.

Once the predetermined energy deposition and duration have been achieved, acoustical horn 210 is retracted, support means 205 is retracted, pinch roller 204 is retracted and the formed shell is ejected from mandrel 203. If an abnormal condition has occurred or the parameters have exceeded the acceptable ranges, controller means 60 can be programmed to sound an alarm and cancel the signal which ejects the formed shell from mandrel 203.

The formed shell is ejected from mandrel 203 by means of side pieces 202 and eject roller 211. Side pieces 202 are slidingly connected to a core and together form mandrel 203. When the formed shell is to be ejected, side pieces 202 are urged forward by means of an air cylinder in communication with side pieces 202 via U-shaped fork 209. Since the formed shell is frictionally engaged with side pieces 202, the formed shell is also urged forward into contact with eject roller 211. Eject roller 211 rotates in the direction of travel of the formed shell off of mandrel 203. Thus when the formed shell contacts eject wheel 211, the formed shell is pulled off of mandrel 203. Side pieces 202 then return to their original position.

After the shell is formed and ejected from the forming and sealing station, it is transferred to another station via a conveyor belt or other conventional transferring means to a glue station. Here a small amount of wet adhesive is applied to the inside of the formed shell. This adhesive is used to affix the foil, which overwraps the bundle of cigarettes, in the formed shell.

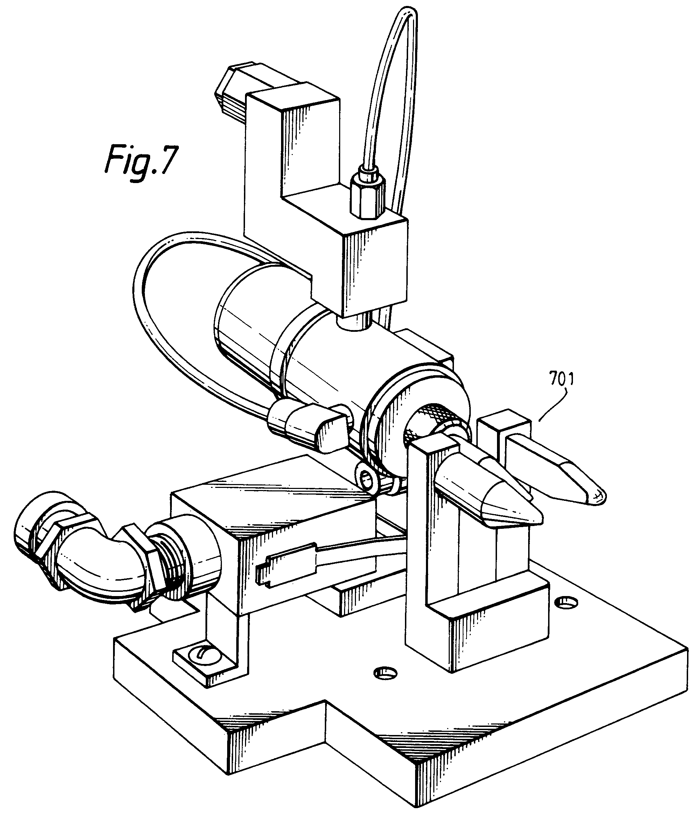

The glue station preferably comprises a standard Kaymich system. See FIG. 7. This system comprises a pressurized glue tank and a nozzle fixture with a trigger. When the formed shell is slid over the nozzle fixture, the formed shell strikes a trigger which causes the adhesive to be transferred from the pressurized glue tank to the nozzle. A small amount of standard white glue, such as a Fuller 3910 glue, is used.

Preferably, concurrently with the forming and sealing of blank 100 into shells, cigarettes are collated into the proper arrangement and overwrapped with foil. The resulting cigarette bundle is then inserted into the shell. The standard white glue applied to the inside of the shell affixes the foil of the cigarette bundle to the shell.

A standard Molins filler section that has been modified is preferably used to collate the cigarettes into the proper arrangement and to overwrap them in foil. A detailed description of such an apparatus can be found in US 567 810.

The following will serve to briefly decribe the apparatus.

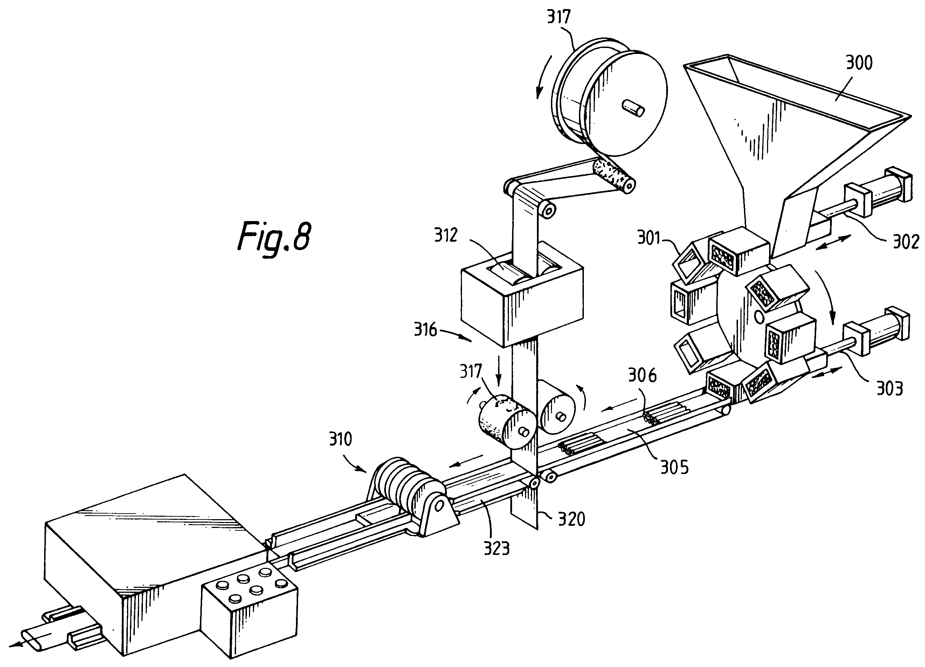

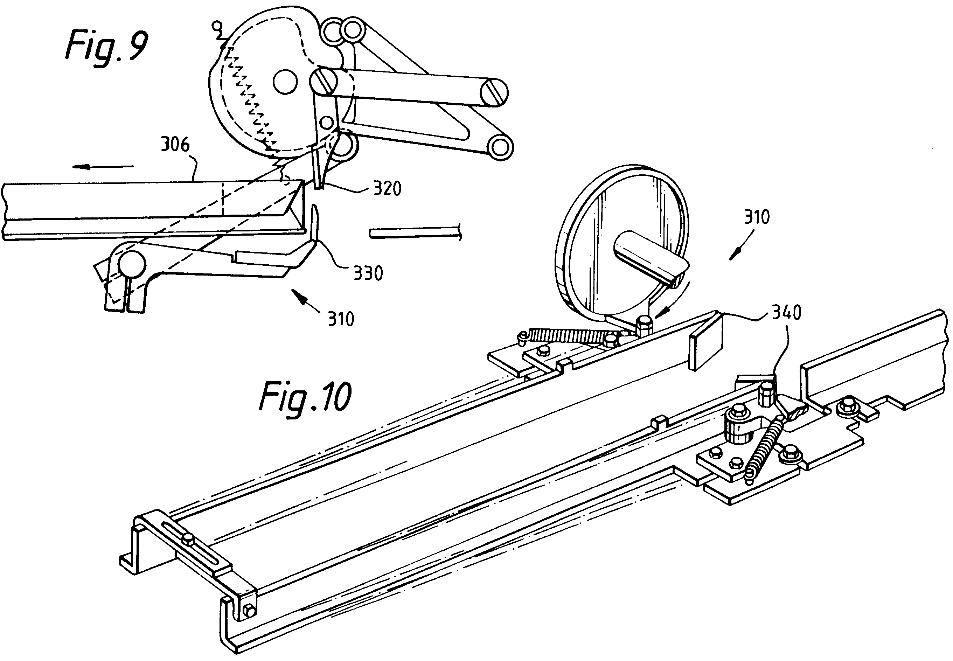

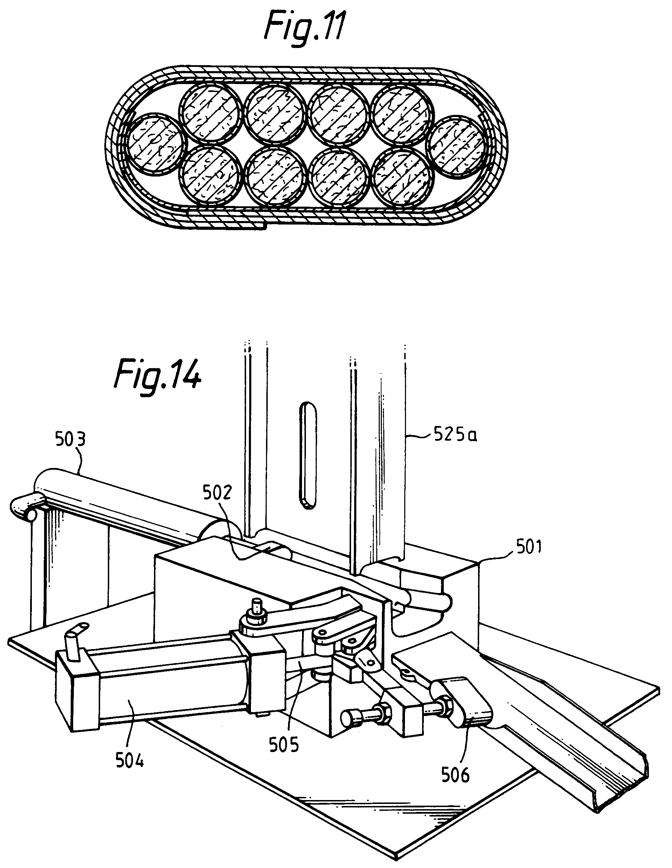

In this machine shown in Figs. 8 to 10, cigarettes are loaded into a hopper 300 where they descend by gravity between vanes for transfer to a pocket wheel 301. The vanes should be oriented such that ten cigarettes are collated into an arrangement of two rows of four cigarettes with one cigarette at either end of the rows adjacent to the area between the two rows. See FIG. 11. Of course for other differently shaped, larger or smaller shells, a different arrangement and number of cigarettes may be used.

Once the cigarettes are oriented properly, a plunger 302 transfers the properly oriented cigarettes into one pocket of pocket wheel 301. Pocket wheel 301 rotates to carry the properly oriented cigarettes down onto an initial slide 305 which transfers the cigarette bundle 306 to initial foil wrapping station 316. Cigarette bundles 306 move along initial slide 305 by means of a plurality of evenly spaced pusher plates. The pusher plates are connected to an endless chain and travel along initial slide 305 via a slot through which the pusher plates extend. The pusher plates push cigarette bundles 306 out of the pocket and transport them along the length of initial slide 305 to initial foil wrapping station 316.

During its rotation, pocket wheel 301 remains stationary for a set period of time to allow cigarette bundle 306 to be transferred into one pocket and out of another pocket of pocket wheel 301. When pocket wheel 301 is momentarily stationary, plunger 302 pushes a group of properly oriented cigarettes into one pocket. Simultaneously, a plunger 303 pushes one group of properly oriented cigarettes out of another pocket in pocket wheel 301 onto initial slide 305. Side guides located on either side of initial slide 305 maintain cigarette bundle 306 in the proper arrangement as the cigarettes are transferred to initial foil wrapping station 316.

The foil is preferably supplied to initial foil wrapping station 316 in large reels 317. If desired, an embossing head 312 may be used to emboss the foil prior to being wrapped around cigarette bundle 306.

In initial foil wrapping station 316, the foil 320 is threaded through a carriage assembly 317 where it is cut to a predetermined length. The area of the foil should be such that the foil covers an area slightly greater than the total area of cigarette bundle 306. The cut foil is then held vertically in position by carriage assembly 317 at the end of initial slide 305. The pusher plate pushes a cigarette bundle 306 through carriage assembly 317 into the foil at about the midpoint of the foil length. The motion of the cigarette bundle 306 in conjunction with a plate above secondary slide 323 causes the foil to fold down over the top of cigarette bundle 306. In addition, the motion of cigarette bundle 306 in conjunction with the surface of secondary slide 323 in line with the end of initial slide 305 causes the foil to fold up under cigarette bundle 306.

Cigarette bundle 306 is then transferred to a secondary folding station 310 via secondary slide 323 and a plurality of evenly spaced pusher plates attached to a continuous chain. As cigarette bundle 306 is transported along secondary slide 323 to secondary folding station 310, a pair of fixed side folders on either side of secondary slide 323 contacts the foil at the end of cigarette bundle 306 to fold in the foil at the corners of the leading edge of cigarette bundle 306.

When cigarette bundle 306 arrives at secondary folding station 310, folders 330 rotate up to fold the foil under cigarette bundle 306 up over the trailing edge of cigarette bundle 306 and then folders 320 rotate down to fold the foil above cigarette bundle 306 down over the trailing edge of cigarette bundle 306. Of course, folders 320 could first fold the foil, down over the trailing edge of cigarette bundle 306 before folders 330 fold the foil up over the trailing edge of cigarette bundle 306. Tuckers 340 then rotate inwardly to tuck in the corners of the foil at the trailing edge of cigarette bundle 306. Finally, fixed side folders, located along both sides of secondary slide 323, urge the foil under cigarette bundle 306 up over the sides of cigarette bundle 306 and urge the foil above cigarette bundle 306 down over the side of cigarette bundle 306 as cigarette bundle 306 moves along secondary slide 323. Again the fixed side folders could first fold the foil down over the sides of cigarette bundle 306 before folding the foil up over the sides of cigarette bundle 306.

By tucking in the corners of the foil at the trailing edge of cigarette bundle 306 prior to folding the foil over the sides of cigarette bundle 306, a smooth flat aesthetically pleasing appearance is provided.

Once the foil has been completely folded around cigarette bundle 306 at secondary folding station 310 cigarette bundle 306 is pushed to the exit of the apparatus. The finished cigarette bundle is then inserted into a formed shell by positioning a formed shell in a tongue piece at the end of the cigarette collating and foil wrapping apparatus. As the foil wrapped cigarette bundle is transferred to the end of the cigarette collating and foil wrapping apparatus it is pushed into the formed shell. The foil wrapped cigarette bundle in the formed shell is then transported to the next station by conventional means where end caps are inserted into either end of the assembly.

The end caps, preferably formed from polyethylene, are inserted into both ends of the shell automatically as the shells are transferred to the end cap sealing station. FIG. 4 shows one end of a shell having an end cap 15 inserted therein.

A detailed description of a particular apparatus for automatically inserting end caps 15 into the ends of the shells can be found in US 567 808

The following will serve to briefly describe such an apparatus.

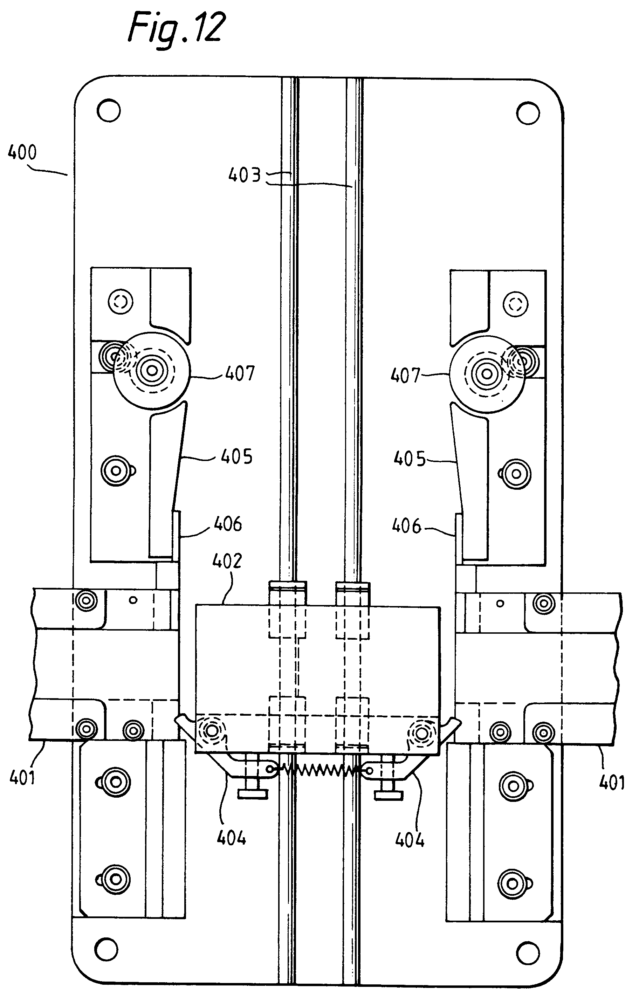

As shown in FIG. 12, end cap inserting apparatus 400 comprises a pair of hoppers 401, slide means 402 mounted on a pair of slide shafts 403, pushers 404, guide rails 405, guide springs 406 and guide wheels 407.

Hoppers 401 contain a plurality of end caps in an upright position to be inserted into the ends of the shells. Hoppers 401 are located on each side of a conveyor means such as a slide mechanism. Of course other suitable conveying means such as a conveyor belt could be used. Hoppers 401 are arranged such that gravity provides the impetus to urge the end caps toward the discharge end of hoppers 401 adjacent the conveying means.

Preferably the conveying means is a slide mechanism which comprises a slide means 402 for holding one shell. Slide means 402 rides on a pair of slide shafts 403. Of course a plurality of slide means could be slidably engaged with slide shafts 403 to increase the throughput of end cap inserting apparatus 400. Slide means 402 carries one shell positioned such that its longitudinal axis is perpendicular to the direction of travel of slide means 402.

As the shell is carried past hoppers 401 a pair of pushers 404 rotatably located adjacent to each side of slide means 402 each engages one end cap to remove the end cap from hoppers 401. Guide springs 406 are located downstream of hoppers 401 to ensure that the end caps remain in an upright position as they are carried downstream of hoppers 401 into actual contact with the shell. Guide rails 405 are angled in toward slide shafts 403 between about 3 degrees and about 35 degrees to gradually urge the end caps into the ends of the shell. When the shell proceeds downstream of hoppers 401, the end caps are pushed toward guide rails 405 by pushers 404. Guide springs 406 and guide rails 405 support the end caps in an upright position and, with the angle of convergence of guide rails 405, urges the end cap toward and into the open end of the shell.

Guide wheels 407 are preferably located downstream of guide rails 405 at the point of highest friction between the end cap and guide rails 405. Guide wheels 407 facilitate the insertion of the end cap into the shell. Guide wheels 407 also minimize the amount of friction across the face of the end caps which in turn minimizes the possibility that the end cap surface will be scratched by guide rails 405 when the end cap is inserted into the shell. The continuing movement of the shell causes the end cap to be completely inserted into the shell once the resulting box exits end cap inserting apparatus 400.

Once the end caps are inserted, the resulting box is transferred to the end cap sealing station by a conveyor belt or other suitable conveying means where the end caps are sealed into both ends of the box.

Preferably the end caps are sealed by the use of a pre-applied dry adhesive, such as a Pierre Stevens No. 7720, and an ultrasonic sealing device, such as the 900 SERIES manufactured and marketed by Branson Ultrasonics Corporation. Of course, other means for providing heat to activate the pre-applied dry adhesive could be used. The dry adhesive is preapplied in strips about 1/8 inch in length inward from each end of blank 100, i.e., between edges 105 and 104 and between edges 112 and 104. The dry adhesive has a melting point of about 230°F.

It has been determined, based on parametric evaluation of sample runs, that for an ultrasonic sealing device operating at a frequency of 20 kHz, about 350 milliseconds is required to deposit a total energy in the range of 90 to 125 Joules (target of 100 Joules) at the pair of end caps to obtain sufficient melting of the dry adhesive to provide a durable bond. If the energy deposition is outside this preferred range, it has been observed that the seals are usually defective.

A detailed description of a particular apparatus for sealing the end caps in the hinged tory box can be found in US 567 806.

The following will serve to briefly describe such an apparatus.

A box having frictionally engaged end caps in contact with preapplied dry adhesive strips is placed by hand by the operator or other conventional transferring means into the U-shaped depression of work block 501 so that one end cap abuts against pad 502 of cylinder 503. The operator then pushes buttons on a control panel to initiate the sealing sequence.

Pneumatic cylinder 504 is extended, causing arm 505 to rotate pad 506 into contact with the other end cap of the box, thereby assuring that the box is properly registered in the U-shaped depression of work block 501. Ultrasonic sealing devices 520a and 520b are opposingly mounted, preferably vertically, on a frame. Work block 501 has a hole therethrough to allow the acoustical horn 525b of lower ultrasonic sealing device 520b to contact the bottom of the box when it is situated in work block 501. Acoustical horns 525a and 525b of ultrasonic sealing devices 520a and 520b are then simultaneously advanced toward the box by conventional means which are supplied by the ultrasonic sealing device manufacturer. The rate of advance of acoustical horns 525a and 525b is controlled by controller means which are in turn synchronized by a suitably programmed general purpose computer. The acoustical horns 525a and 525b contact the ends of the box at a position in approximate alignment with the end caps. Acoustical horn 525a of upper ultrasonic sealing device 520a contacts about the upper 1/2 of the circumference of the box in the area where the box contacts the end caps while acoustical horn 525b of lower ultrasonic sealing device 520b contacts about the lower 1/2 of the circumference of the box in the area where the box contacts the end caps.

Conventional load cells, which are supplied by the ultrasonic sealing device manufacturer, measure the load exerted by acoustical horns 525a and 525b on the box until a preselected load is obtained. At that point, the converters of ultrasonic sealing devices 520a and 520b are activated. When the converters are activated, controller means monitor the duration and magnitude of energy input to the box. A suitably programmed general purpose computer likewise monitors the output of controller means to assure that the energy and time parameters are within predefined acceptable ranges.

Once the predetermined energy deposition and duration have been achieved, acoustical horns 525a and 525b are retracted, and the piston of cylinder 504 is retracted, moving pad 506 away from the end cap through an arcuate path. If the energy deposition and time are determined by the computer to be within predefined acceptable ranges, cylinder 503 is actuated, whereby pad 502 ejects the sealed box onto a chute, whence it slides to a belt conveyor or other suitable conveying means for transfer to a plastic overwrap station. In the event that an abnormal condition has occurred or the parameters have exceeded the acceptable ranges, the computer will sound an alarm and cancel the signal which actuates cylinder 503. In such a situation, the operator will be required to remove the defectively sealed box from work block 501.

The sealed box is then overwrapped with plastic at a plastic wrapping station. A standard automatic wrapping machine such as the High-Speed, Turret-Type Automatic Wrapping Machine, Model 716S, Serial No. 3-7025 manufactured and marketed by the Scandia Packaging machinery company of Clifton, New Jersey is preferably used.

After the boxes are overwrapped with plastic, they are placed in cartons and shipping boxes for shipment to consumers and retail dealers.

Thus it can be seen that a process for efficiently packaging cigarettes in a box having a cross-section with one or more arcuate surfaces and having plastic end caps is provided. One skilled in the art will appreciate that the invention can be practiced by other than the described embodiments, which are presented for purposes of illustration and not of limitation, and the present invention is limited only by the claims which follow.

## Claims

1. A process for packaging cigarettes in a box having an arcuate cross section comprising:
   a) forming a shell from a blank;
   b) inserting a cigarette bundle into the shell;
   c) inserting an end cap into at least one end of the shell; and
   d) adhering the or each end cap to the shell.

2. A process according to claim 1 comprising:
   a) forming a shell from a blank;
   b) applying adhesive to the inside of the shell;
   c) forming a cigarette bundle overwrapped with foil;
   d) inserting the foil wrapped cigarette bundle into the shell;
   e) inserting an end cap into at least one end of the shell;
   f) adhering the or each end cap to the shell;

and
g) overwrapping the shell with plastic.

3. A process for packaging cigarettes in a box having an arcuate cross section comprising:
   a) collating a plurality of cigarettes into a bundle;
   b) folding foil over the bundle;
   c) inserting the bundle into a shell;
   d) inserting an end cap into at least one end of the shell; and
   e) adhering the or each end cap to the shell.

4. A process according to claim 3 in which the folding step is accomplished by;
   a) placing a first end of the bundle at about the midpoint of the foil such that the longitudinal axis of the bundle is perpendicular to the foil;
   b) folding the foil over the top and bottom of the bundle;
   c) tucking in the corners of the foil at the first end of the bundle;
   d) folding the foil over a second end of the bundle;
   e) tucking in the corners of the foil at the second end of the bundle; and
   f) folding the foil over both sides of the bundle.

5. A process according to any preceding claim in which the cigarettes are collated into a bundle having two rows of four cigarettes with a further cigarette located at each end of the bundle;

6. A process according to any preceding claim in which the shell is formed by wrapping the blank upon itself and sealing two longitudinal margins of the shell by an adhesive.

7. A process according to claim 6 in which the shell is sealed by a dry adhesive activated by heat.

8. A process according to any preceding claim in which the or each end cap is adhered to the shell by a dry adhesive activated by heat.

9. A process according to claim 7 or 8 in which the heat is generated by ultrasound.

10. A process according to any preceding claim further comprising applying adhesive to the inside of the shell prior to the insertion of the bundle into the shell.

FORM SHELL → SEAL SHELL → APPLY GLUE → INSERT BUNDLE → INSERT END CAPS → SEAL END CAPS → OVERWRAP WITH PLASTIC → PLACE IN CARTONS

COLLATE CIGARETTES → FOLD FOIL → INSERT BUNDLE

*Fig.1*

*Fig.2*

*Fig.6*

Fig. 3

Fig. 4

Fig.5

*Fig.7*

701

Fig.8

Fig.9

Fig.10

306

320

330

310

310

340

EP 0 475 587 A1

*Fig.11*

*Fig.14*

503

502

525a

501

504

505

506

# Fig.12

*Fig.13*

**European Patent Office**

## EUROPEAN SEARCH REPORT

Application Number

EP    91 30 7385

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | US-A-4 923 059 (PHILIP MORRIS)<br>* column 3, line 31 - column 5, line 21; figures * | 1,6-9 | B65B19/22<br>B31B17/00 |
| D,A | | 2,3 | |
| | --- | | |
| Y | CH-A-406 043 (MOLINS)<br>* page 1, line 70 - page 2, line 117; figures * | 1-4 | |
| | --- | | |
| Y | GB-A-477 331 (W. BUTLER)<br>* page 1, line 32 - line 45 *<br>* page 6, line 18 - line 61; figures * | 1-4 | |
| | --- | | |
| Y | CH-A-366 790 (MOLINS)<br>* page 2, line 100 - page 3, line 10 *<br>* page 4, line 35 - line 97; figures * | 4 | |
| | --- | | |
| A | DE-A-1 586 298 (M. SCHMIDT)<br><br>* page 3, line 13 - page 4, line 30; figures * | 1,2,3,6,7 | |
| | --- | | |
| A | US-A-1 941 044 (J. NEFF)<br>* page 1, line 35 - line 78; figures * | 5 | TECHNICAL FIELDS SEARCHED (Int. Cl.5) |
| | ----- | | B65B<br>B31B |

The present search report has been drawn up for all claims

| Place of search | Date of completion of the search | Examiner |
|---|---|---|
| THE HAGUE | 05 DECEMBER 1991 | JAGUSIAK A.H.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)